# DEMANDE DE BREVET EUROPEEN

(11) **EP 4 372 064 A2**
(43) Date de publication de la demande: **22.05.2024**
(21) Numéro de dépôt: 24161034.4
(22) Date de dépôt: 23.07.2019
(51) Int. Cl.: C09J 153/02

(54) **COMPOSITION POUR ADHÉSIF STRUCTURAL**

(30) Priorité: 24.07.2018 FR 1856878
(62) Demande divisionnaire de: 19740593.9
(71) Demandeur: Jacret, 95500 Le Thillay (FR)
(72) Inventeur: DAVID, Régis, 95120 Ermont (FR)
(74) Mandataire: Flesselles, Bruno F.G.

(57) **Abrégé**

L'invention se rapporte à une composition pour adhésif structural acrylique contenant un des monomères (méth)acrylates dont au moins 20 % d'un mélange de méthacrylate de 1,3-Dioxan-5-yl et de méthacrylate de 1,3-Dioxolan-4-ylmethyl, ainsi que des copolymères bloc, des élastomères et des particules formées d'une coquille thermoplastique et d'un coeur élastomérique.

## Description

La présente invention se rapporte au domaine des adhésifs structuraux acryliques (à base d'acrylate ou de méthacrylate) et à leurs applications.

Les adhésifs structuraux sont une bonne alternative aux autres techniques mécaniques pour lier entre eux deux matériaux, tels les métaux ou les plastiques. En effet, la répartition de force est meilleure par collage que lorsque l'on utilise des techniques alternatives telles que le rivetage ou la soudure. De plus, l'utilisation du collage permet souvent de travailler plus rapidement, et présente également l'avantage de proposer une meilleure isolation contre des éléments externes (poussière, humidité) que les technologies mécaniques.

Les adhésifs structuraux sont ainsi utilisés dans de nombreux domaines industriels, même s'ils présentent certains désavantages. De fait, le lien créé lors de la polymérisation de l'adhésif (prise) est souvent rigide lorsqu'une bonne résistance mécanique est nécessaire. Ainsi, si l'élasticité de l'adhésif est insuffisante, une rupture peut être constatée lorsque les deux pièces liées l'une à l'autres sont amenées à subir des forces les éloignant l'une de l'autre. Il existe des adhésifs présentant une bonne élasticité, mais ils ont souvent une faible résistance mécanique. La Demanderesse a développé et décrit (WO2008080913 et WO2008125521) des adhésifs résolvant ce problème, par utilisation combinée de monomères (méth)acrylates, de copolymères blocs, d'élastomères et de core-shells (particules formées d'une coquille ou coque thermoplastique et d'un coeur élastomérique).

Les adhésifs structuraux sont formés de deux éléments :
- une composition (résine) contenant des monomères (méth)acrylates, c'est-à-dire à base de monomères esters d'acrylate ou de méthacrylate et un agent catalyseur permettant la polymérisation et la prise de l'adhésif.

Ces deux éléments sont stockés dans deux compartiments différents et sont mélangés lors de l'application de l'adhésif. L'agent catalyseur est un initiateur de polymérisation à radicaux libres, en particulier à base de peroxyde, et est bien connu dans l'art.

Les monomères (méth)acrylates (monomères acrylates ou méthacrylates) peuvent notamment être obtenus par estérification d'un alcool et d'un acide méthacrylique ou acrylique.

De tels monomères sont connus dans l'art et incluent notamment le méthacrylate de méthyle, le méthacrylate d'éthyle, le méthacrylate de tétrahydrofurfuryle, le méthacrylate de phénoxyéthyle, le méthacrylate d'isobornyle, le méthacrylate de glycidylether, le méthacrylate de benzyle, le méthacrylate de cyclohexyle, le méthacrylate de triméthylcyclohéxyle, ou le méthacrylate d'hydroxyéthyle.

Le méthacrylate de méthyle et le méthacrylate d'éthyle sont les monomères généralement utilisés dans les adhésifs structuraux acryliques.

Le problème de ces monomères, généralement utilisés dans ces adhésifs structuraux est leur odeur importante après polymérisation, qui les rend difficilement utilisables dans des applications industrielles telles que l'automobile.

On va généralement rechercher les performances qui permettent une utilisation dans plusieurs industries :
- Cisaillement (Min 14 MPa sur Aluminium (AI), de préférence au moins 17 MPa)
- Pelage (Min 10 N/mm sur AI, de préférence au moins 12 N/mm)
- Allongement (min 80 %, de préférence au moins 100 %)
- Rhéologie utilisable pour certaines formulations en joint épais
- Tenue de la colle en température : température de transition vitreuse (Tg), mesurée à 1 Hz, supérieure à 80°C.

De façon plus spécifique, et pour certaines applications, il convient de développer des adhésifs structurels bi-composants acryliques, présentant une odeur plus faible que les adhésifs classiques, et conservant essentiellement les propriétés mécaniques des adhésifs de l'art antérieur :
- une résistance au pelage supérieure à 10 N/mm sur aluminium, de préférence supérieur à 13 N/mm, voire supérieure à 15 N/mm, et
- de préférence, une résistance au cisaillement supérieure à 15 MPa, de préférence supérieure à 18 MPa sur aluminium et/ou
- de préférence un allongement à la rupture supérieur à 80% de préférence supérieur à 100%.

Ainsi, la Demanderesse souhaite obtenir une bonne résistance au pelage et préférentiellement au moins une bonne résistance au cisaillement et/ou un bon allongement à la rupture.

La Demanderesse a pu déterminer qu'il ne suffit pas de simplement remplacer les monomères méthacrylates classiquement utilisés dans l'art par les nouveaux monomères existant sur le marché pour obtenir des résultats satisfaisants, mais que l'obtention des performances mécaniques nécessite un nouveau développement et un changement drastique des proportions des autres composants de la résine.

Ainsi, WO2008080913 mentionne l'utilisation de copolymères blocs en quantité comprise entre 10 et 30 % en poids, mais précise que les quantités préférées sont comprises entre 15 et 25 % en poids, voire entre 18 et 25 % en poids. Les exemples décrivent un ajout de tels composants entre 21 et 30 % en poids.

WO2008125521 décrit l'utilisation de core-shells (particules formées d'une coque thermoplastique entourant un coeur élastomérique), dans une quantité comprise entre 2 et 20 % en poids de la composition, de préférence entre 5 et 15 % en poids.

US20170306191 décrit des compositions contenant un promoteur d'adhésion à base d'ester de phosphate, et une polyamine de haut poids moléculaire en tant qu'accélérateur de polymérisation.

DE 33 23 733 décrit des adhésifs optiques à base d'ester-éther durcissant à la lumière, utilisant différents monomères tels que cités, mais se rapporte à d'autres applications que celles envisagées, notamment pour ce qui est des propriétés mécaniques.

VISIOMER Methacrylates: Reactive Diluents for Replacing Styrene in Composite and Gel Coat Applications mentionne le Glyfoma, mais ne donne aucun élément ne permettant de savoir ce à quoi correspond ce monomère (pas de formule) ou les problèmes de dissolution des copolymères blocs.

US2006155045A1 décrit des adhésifs (méth)acryliques à faible odeur, en particulier par utilisation du méthacrylate de tétrahydrofurfuryle. Ces adhésifs contiennent également un copolymère bloc de styrène et butadiène et/ou isoprène et/ou éthylène propylène-diène

La Demanderesse a notamment montré que l'utilisation des nouveaux monomères à faible odeur (notamment le Glyfoma) existant sur le marché mène à des compositions qui présentent une rhéologie non acceptable et inutilisable d'un point de vue industrielle, lorsqu'ils sont utilisés seuls en remplacement du méthacrylate de méthyle. En effet, on observe un problème de viscosité trop élevée et/ou de formation de gel ainsi qu'une hétérogénéité dans certains mélanges, liés la présence d'agglomérats des copolymères blocs. Par ailleurs, la Tg du mélange est trop faible pour un nombre important d'applications. Afin de résoudre ce problème technique, la Demanderesse a déterminé qu'il est préférable :
- de limiter la quantité de copolymères blocs utilisés dans le mélange, à des quantités qui sont inférieures à celles exemplifiées dans les documents cités plus haut,
- d'augmenter la quantité de core-shells et/ou d'élastomère,
- préférentiellement de s'assurer que les compositions contiennent au moins 35% voire au moins 40% de polymères (polymères liquides, copolymères blocks, core shell), ce qui est favorable pour obtenir les performances mécaniques souhaitées
- d'ajouter des monomères complémentaires au monomère à faible odeur utilisé. En particulier, on choisira des monomères dont la Tg est supérieure à 105°C, et en particulier le méthacrylate d'isobornyle (Tg 150°C). On peut aussi utiliser de l'acide méthacrylique (Tg 185°C), qui présente également des propriétés de promoteur d'adhésion. La Demanderesse a aussi montré que ces monomères ont un rôle d'ajusteur de la rhéologie et permettent ainsi d'obtenir des compositions utilisables dans des applications industrielles pour lesquelles il est nécessaire d'utiliser des grands joints de colle (industrie automobile, navale ou aéronautique).
- d'utiliser un durcisseur (second composant à ajouter à la résine contenant les monomères pour induire la polymérisation) qui comporte préférentiellement peu ou pas de plastifiant, et une teneur en eau réduite ; en particulier, on pourra utiliser un durcisseur contenant un silane epoxydé tel que décrit dans WO2011033002 ou US20120252978, ce qui augmentera la densité des liaisons du réseau polymérique formé et augmentera sa Tg,

De façon surprenante, la Demanderesse a montré que, dans certains cas, le taux de core-shells devait être augmenté et le taux de copolymères blocs réduit par rapport à ce qui est enseigné ou exemplifié dans ces demandes de l'art antérieur afin d'obtenir des performances mécaniques similaires à celles décrites dans ces documents.

La Demanderesse a également montré qu'il est possible d'augmenter de façon important le taux de polymères (core-shells, copolymères blocs, élastomères) dans la composition afin d'améliorer diverses propriétés de la composition et l'adhésif (notamment la résistance au pelage, le vieillissement ou la résistance à l'humidité).

Ainsi, augmenter la quantité du mélange élastomère - core-shell permet de résoudre les problèmes d'hétérogénéité, d'obtenir une composition homogène qui intègre les copolymères blocs et présente une rhéologie acceptable (pas trop liquide).

Ainsi, dans un premier mode de réalisation, l'invention se rapporte à une composition utilisable dans un adhésif structural, ladite composition comprenant (en poids) :
(a) Entre 35 % et 60 % d'au moins un monomère (méth)acrylate, dont
   i. au moins 20 % d'une molécule de formule générale (I), d'une molécule de formule générale (II) ou d'un mélange de molécules de formule générale (I) et (II) 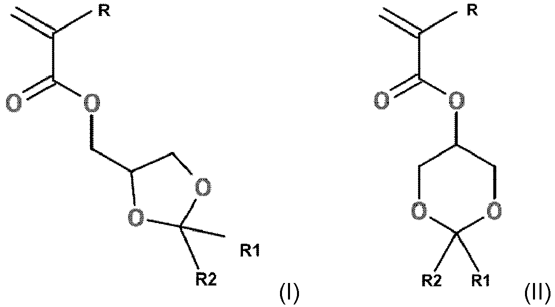 dans laquelle R, R1 et R2 sont respectivement et indépendamment H ou CH₃,
   ii. au moins 5 % d'un ou plusieurs autres monomères (méth)acrylate,
(b) de 15 à 30 % % de particules formées d'une coquille thermoplastique et d'un coeur élastomérique
(c) entre 9 et 15 % d'un copolymère bloc élastomérique contenant du styrène et au moins un second monomère ou de mélanges de tels copolymères blocs
(d) entre 5 et 25 % d'un élastomère ;
la somme des pourcentages des composés (b), (c) et (d) étant au moins égale à 35%.

Dans un autre mode de réalisation, la composition est telle que le composé (a) est présent entre 35 et 55 % en poids, et la somme des pourcentages des composés (b), (c) et (d) étant au moins égale à 40%.

On préfère également que qu'aucun autre monomère (méth)acrylate ajouté ne le soit à une quantité supérieure à 15%, de préférence supérieure à 10%, même si leur mélange peut être de l'ordre de 15 à 20%.

La composition peut également contenir d'autres éléments. La somme des proportions des composants présents dans la composition est égale à 100 %.

Il est préféré lorsque la composition contient entre 25% et 35% du monomère de formule générale (I) ou (II).

Il est aussi préféré lorsque la composition contient entre 10% et 20% d'au moins un autre monomère.

On peut ajouter tout monomère (méth)acrylate dans la composition. De préférence, on préfère que cet autre monomère (méth)acrylate ou ester (méth)acrylique soit tel que la partie alcool présente une chaîne linéaire (chaîne latérale hydrocarbonée) d'au moins 6 atomes de carbones (à chaîne longue).

On préfère toutefois que ce monomère soit choisi dans le groupe constitué du méthacrylate d'isobornyle (MAISOBOR), méthacrylate de 2-éthylhexyle (MA2EH) acrylate de 2-éthylhexyle (A2EH), méthacrylate de 2-hydroxy-éthyl (HEMA), méthacrylate de 2-hydroxypropyl (HPMA), méthacrylate de lauryle, des esters à base de polyéthylène-glycol et des mélanges de ces monomères.

En particulier, la composition contient entre 1 et 10%, de préférence entre 5 et 10% de méthacrylate d'isobornyle (MAISOBOR).

En particulier, la composition contient au moins 5 % d'acrylate de 2-éthylhexyle ou de méthacrylate de 2-éthylhexyle. En particulier, la composition contient au moins 5 % d'acrylate de 2-éthylhexyle, et pas plus de 10% de ce composé.

Dans un mode de réalisation préféré, on préfère lorsque les particules (a), le copolymère bloc élastomérique (b) et l'élastomère (c) contiennent du butadiène (voir aussi plus bas).

Dans un second mode de réalisation, l'invention se rapporte donc à une composition utilisable dans un adhésif structural, ladite composition comprenant (en poids) :
(a) Entre 40 % et 60 % d'au moins un monomère (méth)acrylate, dont au moins 20 % d'une molécule de formule générale (I), d'une molécule de formule générale (II) ou d'un mélange de molécules de formule générale (I) et (II) 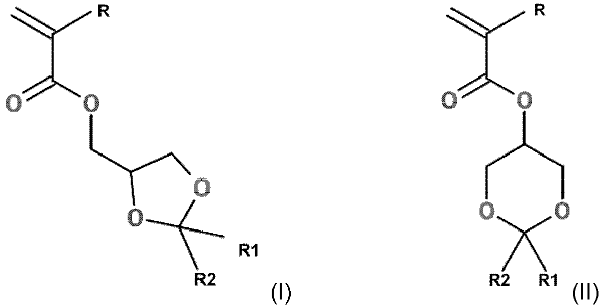 dans laquelle R, R1 et R2 sont respectivement et indépendamment H ou CH₃,
(b) au moins 20 % de particules formées d'une coquille thermoplastique et d'un coeur élastomérique (core shell)
(c) entre 8 et 13 % d'un copolymère bloc élastomérique contenant du styrène et au moins un second monomère.
(d) entre 5 et 10 % d'un élastomère.

La composition peut également contenir d'autres éléments. La somme des proportions des composants présents dans la composition est égale à 100 %.

La composition contient donc au moins 20% d'une molécule de formule générale (I), d'une molécule de formule générale (II) ou d'un mélange de molécules de formule générale (I) et (II).

D'une façon générale, l'adhésif structural est un bi-composant, qui formé de ladite composition (aussi appelée résine) et d'un agent catalyseur comprenant un amorceur de polymérisation radicalaire préférentiellement de type peroxyde. Le mélange de la résine et de l'agent catalyseur mène à la polymérisation des monomères (méth)acrylates (monomères méthacrylates ou monomères acrylates).

Lorsque R1 et R2 sont des hydrogènes et que les substituants R sont identiques, les deux molécules (I) et (II) sont des isomères l'une de l'autre et ces deux molécules sont donc généralement présentes l'une et l'autre en solution.

En solution, on observe donc l'équilibre

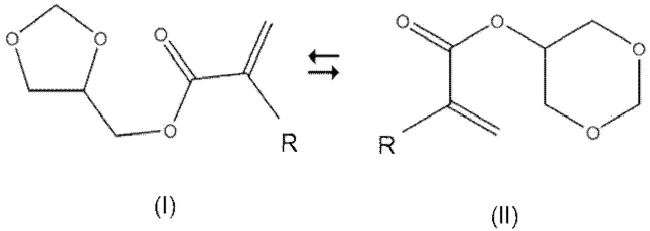

On passe de la formule (I) à la formule (II) par la forme à chaîne ouverte (ouverture du cycle entre les deux atomes d'oxygène).

Lorsque R est CH₃ et que R1 et R2 sont des atomes d'hydrogène, les monomères sont des esters obtenus par réaction du formal de glycérine et de l'acide méthacrylique (acide 2-méthyl-2-propénoïque). Le formal de glycérine est obtenu à partir de glycérine et de formaldéhyde.

Lorsque R est H et que R1 et R2 sont des atomes d'hydrogène, les monomères sont des esters obtenus par réaction du formal de glycérine et de l'acide acrylique (acide propénoïque). Il est rappelé que le formal de glycérine est un mélange de 5-hydroxy-1,3-dioxane et de 4-hydroxyméthyl-1,3- dioxolane (resp. CAS 4740-78-7 et 5464-28-8).

Dans un mode de réalisation particulier, la composition, selon l'un ou l'autre mode de réalisation présenté ci-dessus, présente au moins 20 % d'un mélange de molécules (I) et (II) dans lesquelles le composé R est un CH₃, les composés R1 et R2 sont des atomes d'hydrogène. Un tel mélange est ainsi composé de méthacrylate de 1,3-Dioxan-5-yl (CAS 132977-93-6) et de méthacrylate de 1,3-Dioxolan-4-ylmethyl (Cas 10525-59-4). Un tel mélange est commercialié par la société Evonik Industries AG, Darmstadt, Allemagne sous la dénomination VISIOMER^{®} GLYFOMA.

Les proportions relatives de ces deux molécules, isomères l'une de l'autre sont généralement comprises entre 60:40 et 40:60.

La composition peut également contenir des molécules (I) et (II) dans lesquelles R, R1 et R2 sont des CH₃. Ceci inclut le méthacrylate d'isopropylidèneglycérol (CAS 7098-80-8), commercialisé notamment sous la dénomination Bisomer^{®} IPGMA par la société GEO Specialty Chemicals, Inc, Ambler, PA, États-Unis.

De telles molécules de formule générale (I) et (II) sont bien connues dans l'art et décrites notamment dans les demandes de brevet US2014128536A1 et WO2017134002.

Ainsi, de façon préférée, la composition contient au moins 20 % d'un mélange de méthacrylate de 1,3-dioxan-5-yl (CAS 132977-93-6) et de molécules de méthacrylate de 1,3-dioxolan-4-ylmethyl. Ces composés sont particulièrement intéressants car ils ne sont pas inscrits sur la liste CMR (basée sur la liste des substances cancérogènes et/ou mutagènes et/ou toxiques pour la reproduction figurant dans l'annexe VI du règlement (CE) no 1272/2008 du Parlement européen et du Conseil du 16 décembre 2008).

Dans un autre mode de réalisation, la composition au moins 20 % de méthacrylate d'isopropylidèneglycérol.

Dans un autre mode de réalisation, la composition contient au moins 20 % d'un mélange de méthacrylate de 1,3-dioxan-5-yl, de méthacrylate de 1,3-dioxolan-4-ylmethyl et de méthacrylate d'isopropylidèneglycérol.

Dans un mode de réalisation particulier, la composition contient moins de 45 % en poids des monomères de formule (I) ou (II).

Dans ce mode de réalisation, on préfère ajouter un autre monomère (méth)acrylate. On peut aussi ajouter des mélanges de tels autres monomères. De préférence, on en ajoute au moins 5%, et au plus 20%, bien que l'on ne puisse pas exclure que l'on pourrait en utiliser plus pour certaines applications. On préfère ajouter des mélanges de tels autres monomères de telle sorte qu'aucun ne dépasse individuellement les 10% en poids dans la composition, même si l'on peut monter jusqu'à 15% pour le méthacrylate d'isobornyle.

De préférence, on préfère que cet autre monomère (méth)acrylate ou ester (meth)acrylique soit tel que la partie alcool présente une chaîne linéaire (chaîne latérale hydrocarbonée) d'au moins 6 atomes de carbones (à chaîne longue).

Dans un mode de réalisation particulier, la composition contient entre 20% et 30% de molécules de formule (I) ou (II) (incluant les mélanges), et au moins 15%, de préférence au moins 20% d'un autre monomère ester (meth)acrylique à chaîne longue.

Dans un autre mode de réalisation, on peut avoir plus de 30% de molécules de formule (I) ou (II) (incluant les mélanges). Dans ce mode de réalisation, on ajoute préférentiellement au moins environ 10%, de préférence au moins 12% d'un autre monomère ester (meth)acrylique à chaîne longue

Parmi les monomères ester (meth)acrylique autres que ceux de formule (I) ou (II), On peut ainsi ajouter du méthacrylate d'isobornyle (MAISOBOR), du méthacrylate de 2-éthylhexyle (MA2EH) de l'acrylate de 2-éthylhexyle (A2EH), du méthacrylate de 2-hydroxy-éthyl (HEMA), du méthacrylate de 2-hydroxypropyl (HPMA), du méthacrylate de lauryle, des esters à base de polyéthylène-glycol ou des mélanges de ces monomères.

Ainsi, dans un mode de réalisation particulier, on utilise
- un mélange de GLYFOMA et d'A2EH
- un mélange de GLYFOMA, d'A2EH et d'HEMA
- un mélange de GLYFOMA, de MAISOBOR, d'A2EH et d'HEMA
- un mélange d'IPGMA et d'A2EH
- un mélange d'IPGMA, d'A2EH et d'HEMA
- un mélange d'IPGMA, de MAISOBOR, d'A2EH et d'HEMA
- un mélange de GLYFOMA, d'IPGMA et d'A2EH
- un mélange de GLYFOMA, d'IPGMA, d'A2EH et d'HEMA
- un mélange de GLYFOMA, d'IPGMA, de MAISOBOR, d'A2EH et d'HEMA.

On peut également utiliser, en faible quantité (moins de 10 % en poids, préférentiellement moins de 5 % en poids un monomère choisi dans le groupe constitué du méthacrylate de méthyle, méthacrylate d'éthyle, méthacrylate de tétrahydrofurfuryle, méthacrylate de phénoxyéthyle, méthacrylate de glycidylether, méthacrylate de benzyle, méthacrylate de cyclohexyle, et méthacrylate de triméthylcyclohéxyle. De préférence toutefois, on n'ajoute pas un tel monomère, ou on en utilise moins de 2 %, voire moins de 1 % en poids.

Dans un mode de réalisation particulier, la résine contient entre 2 % et 5 %, voire jusqu'à 10% ainsi qu'indiqué plus haut, en poids d'un monomère mentionné ci-dessus, en particulier de méthacrylate de méthyle ou de méthacrylate d'éthyle. Utiliser ces composés dans ces proportions permet d'améliorer les performances mécaniques, tout en limitant l'apparition d'odeurs indésirables.

Dans un autre mode de réalisation, la composition (résine) ne contient pas de méthacrylate de méthyle ou méthacrylate d'éthyle. De fait, ces monomères dégagent une odeur forte lors de la polymérisation, mais sont également inflammables et présentent des limitations et contraintes d'utilisation quant à la directive européenne REACH.

Dans le premier mode de réalisation, la composition contient de 8 à 30 % % de particules formées d'une coquille thermoplastique et d'un coeur élastomérique. Dans un mode de réalisation particulier, on peut utiliser entre 15 et 25 % de telles particules. Dans ce mode de réalisation, on augmentera alors la quantité d'élastomère afin que la somme de ces composés (b) et (d) soit supérieure à 27%, de préférence supérieure à 29 %, voire supérieure à 30 %.

Dans le second mode de réalisation, la composition contient au moins 20 % (en poids) de particules polymériques élastomériques (b).

Ces particules (b) sont appelées « core-shell » en anglais, sont bien connues de l'homme du métier, et sont formées d'une coquille thermoplastique « dure », préférentiellement à base de polyméthacrylate de méthyle (PMMA), et d'un coeur élastomérique généralement à base de butadiène, souvent copolymérisé avec du styrène, ou à base acrylique. Les core-shell à base de butadiène (coeur contenant du butadiène) sont particulièrement adaptés et préférés pour la mise en oeuvre des compositions décrites ici. On peut notamment citer, dans la mise en oeuvre de l'invention, les polymères acrylonitrile-butadiène-styrène (ABS), méthacrylate-butadiène-styrène (MBS), méthacrylate-acrylonitrile-butadiène-styrène (MABS) et les mélanges de ceux-ci.

Ces particules contiennent un coeur élastomérique réticulé, entouré d'une coquille thermoplastique, souvent un polymère de méthacrylate de méthyle (PMMA). Les brevets US 3,985,703, US 4,304,709, US 6,433,091, EP 1256615, US20140364541 ou US 6,869,497 décrivent notamment de telles particules, qui sont ainsi bien connues de l'homme du métier.

On préfère notamment des particules modificatrices d'impact, et en particulier les MBS modificateurs d'impact (MBS impact modifiers). Dans un mode de réalisation préféré, ces MBS présentent une faible réticulation du polymère formant le coeur. De plus, ces MBS, outre leur résistance à l'impact, présentent également de préférence une résistance au craquement induit par les chocs.

Les polymères core-shell sont disponibles auprès de multiples entreprises. On peut ainsi citer GE Plastics ou Arkema (Paris, France). Les particules préférées sont notamment de type Clearstrength C301, C303H, C223, C350, C351, E920, C859 ou XT100 d'Arkema, les MBS C301, C303H et XT100 étant préféré. On peut aussi utiliser le Durastrength D300 ou D340 d'Arkema, présentant un coeur acrylique entouré d'une enveloppe PMMA. Le XT100 est un core-shell base MMA-butadiène-styrène. De même, on peut également utiliser les MBS développés par Rohm et Haas (Philadelphie, PA, Etats-Unis), notamment le Paraloid^{™} BTA 753.

Ces particules peuvent être utilisées seules ou en mélange. Ainsi, dans un mode de réalisation particulier de l'invention, on utilise un mélange de particules MBS (en particulier les C303H, C301, XT100) et de particules présentant une enveloppe PMMA et un coeur acrylonitrile (notamment les particules D340).

Généralement, on ajoute au plus 27 % ou au plus 26 % en poids de telles particules (b). Ainsi, dans un mode de réalisation préféré, la quantité de particules formées d'une coquille thermoplastique et d'un coeur élastomérique (core shell) (b) est inférieure ou égale à 26 %.

Dans un mode de réalisation préféré, les particules (b) sont choisies parmi les particules acrylonitrile-butadiène-styrène, méthacrylate-butadiène-styrène, méthacrylate-acrylonitrile-butadiène-styrène, méthacrylate-acrylonitrile et les mélanges de celles-ci. On préfère tout particulièrement les particules contenant du butadiène et en particulier les particules méthacrylate-butadiène-styrène.

Dans le premier mode de réalisation, la composition contient également entre 8 et 15 % d'un copolymère bloc élastomérique contenant du styrène et au moins un second monomère ou d'un mélange de tels copolymères blocs.

De préférence, la composition comprend entre 8 et 14 % en poids, de préférence entre 9 et 12 % du ou des copolymère(s) bloc élastomérique(s) (c).

Dans le second mode de réalisation, la composition contient également entre 8 et 13 % d'un copolymère bloc élastomérique contenant du styrène et au moins un second monomère, ou d'un mélange de tels copolymères blocs.

De préférence, la composition comprend entre 9 et 12 % du ou des copolymère(s) bloc élastomérique(s) (c).

Dans les deux modes de réalisation, le second monomère est préférentiellement choisi parmi l'isoprène et le butadiène. Ainsi, le copolymère bloc (c) contenant du styrène et au moins un second monomère est préférentiellement choisi dans le groupe constitué du SIS, du SBS, du SIBS, du SEBS et de leurs mélanges.

Lorsque la composition contient un copolymère bloc contenant du styrène et de l'isoprène, il peut être un copolymère styrène - isoprène - styrène (SIS) ou un copolymère styrène - isoprène - butadiène - styrène (SIBS). On peut notamment utiliser du SIS D1114 (Kraton Polymers), contenant de l'ordre de 19% de polystyrène.

Ainsi, lorsque la composition contient un copolymère bloc contenant du styrène et du butadiène, il peut être un copolymère styrène - butadiène - styrène (SBS), tel que le Kraton D1102 ou D1152 ou un copolymère styrène - isoprène - butadiène - styrène (SIBS) tel le Kraton D1171 ou le Kraton MD6455 (entreprise Kraton Polymers) décrit par Dr. Donn DuBois et al., au congrès Adhesives & Sealants Council Meeting, Louisville, KY, 9-12 octobre 2005.

Lorsque la composition contient un copolymère bloc contenant du styrène et de l'éthylène, il peut être un SEBS (copolymère styrène-éthylène/butylène-styrène) ou un SEPS (copolymère styrène-éthylène/propylène-styrène). Ces composés sont disponibles dans la gamme Kraton G (Kraton Polymers).

De manière préférée, le styrène est présent dans une proportion comprise entre 15 et 50 %, de façon plus préférée entre 22 et 40 %, de façon encore plus préférée environ 28-33 % en poids du copolymère SBS. Il est présent dans une proportion comprise entre 12 et 24 %, de manière plus préférée à environ 18-19 % en poids dans les copolymères SIS ou SIBS.

Lorsque la composition contient un mélange de deux copolymères blocs (par exemple un SIS et un SIBS), la proportion relative SIS / SIBS varie de préférence dans un rapport de 4 : 1 (en poids dans la composition) à 1,5 : 1. La proportion préférée de SIS par rapport au second copolymère bloc est d'environ 3 : 1 ou 3,3 : 1. On peut toutefois également utiliser un mélange de SIS et de SBS dans les mêmes proportions relatives que le mélange SIS / SIBS. On peut également utiliser un mélange de SIS, SIBS et SBS. On peut également rajouter un autre copolymère bloc à l'un de ces mélanges.

Les copolymères blocs SIS, SBS ou SIBS utilisables selon l'invention sont bien connus de l'homme du métier. Ils sont notamment produits par l'entreprise Kraton Polymers (Houston, Texas, USA). Ainsi, on peut utiliser le SIS Kraton D1160 décrit dans US 20050238603 ou le Kraton D1161, le SBS Kraton D1102 décrit dans US 5,106,917 et le SIBS Kraton MD6455 ou Kraton MD 6460.

L'homme du métier sait sélectionner d'autres copolymères blocs SIS, SIBS, SBS utilisables dans la composition selon l'invention, parmi ceux existants, en fonction notamment de leur facilité de dissolution dans les monomères utilisés, ou de leur résistance mécanique en traction.

Dans un mode de réalisation particulier, la composition selon l'invention contient un copolymère bloc élastomérique contenant du styrène et de l'isoprène et au moins un copolymère bloc élastomérique contenant du styrène et du butadiène, soit un mélange SIS / SIBS, un mélange SIS / SBS, ou un mélange SIS / SIBS / SBS. De préférence, la composition contient un mélange SIS / SIBS. Dans un autre mode de réalisation, la composition ne contient que du SBS, et ne contient pas de copolymère bloc contenant du styrène et de l'isoprène.

Dans un autre mode de réalisation, la composition selon l'invention contient uniquement un copolymère bloc élastomérique, contenant du styrène et de l'isoprène, soit un SIS.

Dans un autre mode de réalisation, la composition selon l'invention contient uniquement un copolymère bloc élastomérique SIBS.

Dans le premier mode de réalisation, la composition contient également entre 5 et 25 % d'un élastomère (d), de préférence entre 10 et 25 %. Ainsi que vu plus haut, il est préférable que la concentration en élastomère soit adaptée en fonction de la concentration en particules (b).

Dans le second mode de réalisation, la composition contient également entre 5 et 10% en poids d'un élastomère (d).

Dans les deux modes de réalisation, cet élastomère est de préférence fonctionnalisé (présentant une double liaison à ses extrémités, en particulier des fonctions méthacrylate pour améliorer les liaisons avec les monomères). Dans certains cas, on choisit un élastomère liquide. On utilise de préférence au moins un élastomère fonctionnalisé, seul ou en mélange avec au moins un élastomère non-fonctionnalisé. Il est rappelé qu'un élastomère est un polymère présentant des propriétés « élastiques » (c'est-à-dire la capacité à retrouver sa forme d'origine après avoir été déformé), après réticulation. Il supporte donc de très grandes déformations avant rupture.

On utilise ainsi des élastomères de type homopolymères polybutadiène (que l'on choisit alors préférentiellement liquide et fonctionnalisé), ou polyisoprène. On peut également utiliser du polychloroprène (Neoprène AD10, DuPont, USA). On peut également utiliser des élastomères copolymères butadiène-acrylonitrile notamment lorsqu'ils sont fonctionnalisés. Les fonctionnalités sont portées par les chaînes terminales et les groupements fonctionnels utilisables sont des groupements carboxyle (COOH), amine (NH or NH2), méthacrylate vinyliques ou époxy. Ainsi, un polybutadiène (homopolymère) fonctionnalisé avec des terminaisons vinyliques est particulièrement avantageux.

On peut ainsi utiliser un polybutadiène fonctionnalisé tel que le HYPRO^{™} VTB 2000x168 (terminaisons vinyliques), seul ou en mélange avec un polychloroprène ou un polybutadiène non-fonctionnalisé tel que le HYPRO^{™} CTB 2000x162 (terminaisons carboxyles) (Emerald Performance Materials (EPM), Cuyahoga Falls, Ohio, USA). On peut également utiliser les HYPRO^{™} VTBNX ou CTBNX (copolymères butadiène - acrylonitrile) ayant respectivement des fonctionnalités carboxyle et vinyliques, et plus particulièrement les HYPRO^{™} VTBNX 1300x43 ou 1300x33.

On peut aussi utiliser le Ricacryl 3801 de Sartomer (polybutadiène méthacrylé). On peut également utiliser du polychloroprène (Neoprène AD10, DuPont, USA). Ces élastomères peuvent être utilisés seuls, ou en tant que mélanges (on peut ainsi notamment utiliser un mélange de polybutadiène fonctionnalisé et de polychloroprène, ou un mélange de polybutadiène fonctionnalisé et de polybutadiène non-fonctionnalisé tel le Hycar CTB 2000x162 (EPM)).

Cet élastomère (d) est favorablement présent à une quantité comprise entre 5 et 10 % en poids dans la composition selon l'invention, de préférence entre 6 et 8 %, de façon plus préférée entre 6.5 et 7.6 %.

La composition peut également contenir une amine tertiaire de formule III : 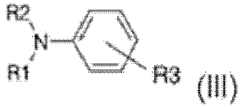 dans laquelle :
- le groupe R3 est un groupe électro-donneur par résonance comprenant au moins un groupe aromatique qui est susceptible de former avec le radical : 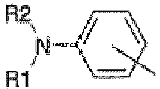 et en combinaison avec ledit amorceur de polymérisation radicalaire, un système conjugué présentant une absorption dans le domaine visible du spectre électromagnétique, pour générer une coloration dudit polymère ou dudit ciment au cours de la réaction de polymérisation dudit monomère,
- les groupements R1 et R2 sont respectivement et indépendamment :
   - des groupes alkyle en C1 à C16, de préférence en C1 à C5, linéaires ou ramifiés,
   - des groupes aryle ou arylalkyle en C5 à C30, de préférence en C5 à C10,
   - des groupes alkylidène en C2 à C15, de préférence en C2 à C5.

Dans un mode de réalisation préféré, ledit groupement R3 comprend au moins une amine tertiaire liée à un groupe aromatique, ce qui permet notamment d'améliorer l'activation. Ainsi, la composition selon l'invention contient des polyamines tertiaires, les groupements amine tertiaire étant portés par des groupes aromatiques. Cette architecture particulière permet de colorer l'adhésif durant la phase de polymérisation.

Dans un mode de réalisation préféré, le groupement R3 comprend au moins deux amines tertiaires liées à deux groupes aromatiques distincts et est notamment de la forme : 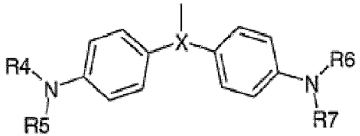 dans laquelle :
- X est choisi parmi : CH, N, et
- R4, R5, R6 et R7 sont choisis parmi :
   - les groupes alkyle en CI à C16, de préférence en CI à C5, linéaires ou ramifiés,
   - les groupes aryle ou arylalkyle en C5 à C30, de préférence en C5 à C10,
   - les groupes alkylidène en C2 à C15, de préférence en C2 à C5.

On préfère particulièrement utiliser, en tant qu'accélérateur de polymérisation dans le cadre de l'invention, une polyamine répondant à la formule :

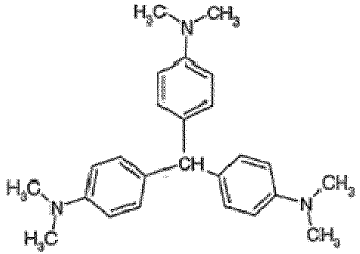

Cette triamine tertiaire est la 4,4',4" méthylidynetris (N, N- diméthylaniline). On l'appelle également « leuco cristal-violet », « leuco » ou « LCV ». La symétrie de la molécule et la présence de trois sites actifs possibles pour activer l'amorceur de polymérisation radicalaire rend cette polyamine particulièrement intéressante.

Dans un autre mode de réalisation, on utilise le crystal violet lactone (CAS 1552-42-7), de formule

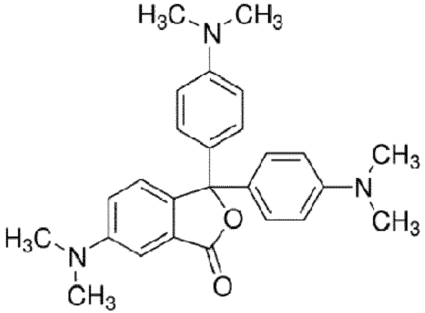

D'autres amines répondant à la formule (I) sont décrites dans WO 03/086327. Ces polyamines de haut poids moléculaire peuvent également être pour produire une composition selon l'invention. On peut également mélanger plusieurs polyamines dans une composition selon l'invention, ou rajouter d'autres activateurs de polymérisation, bien que, dans un mode de réalisation particulier, la composition ne comprenne pas d'autres activateurs de polymérisation que les amines de formule (I).

On peut utiliser une amine de formule (I) qui est une diamine tertiaire de formule (I) dans laquelle le groupement R3 est de la forme : 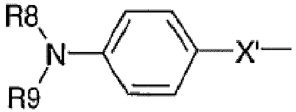 où
- X' est choisi parmi : CH₂, O, O-C₆H₄-O, N-H, N-R et
- R8, R9 et R sont respectivement et indépendamment :
   des groupes alkyle en C_{I} à C₁₆, de préférence en C₁ à C₅, linéaires ou ramifiés,
   des groupes aryle ou arylalkyl en C₅ à C₃₀, de préférence enC₅ àC₁₀,
   des groupes alkylidène en C₂ à C₁₅, de préférence en C₂ à C₅.

L'amine de formule (I) peut également être choisi de telle sorte que R3 soit de la forme 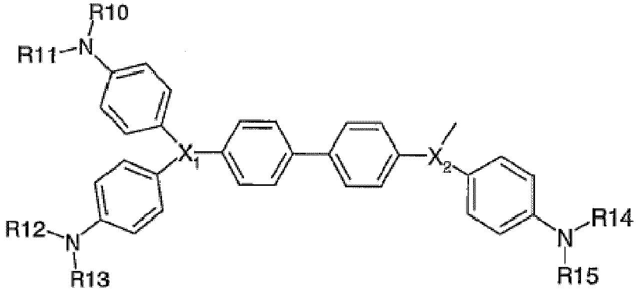
- X₁ et X₂ étant choisis parmi : N et CH,
- R10 à R15 étant indépendamment :
   des groupes alkyle en C₁ à C₁₆, de préférence en C₁ à C₅, linéaires ou ramifiés,
   des groupes aryle ou arylalkyl en C₅ à C₃₀, de préférence en C₅ à C₁₀,
   des groupes alkylidène en C₂ à C₁₅, de préférence en C₂ à C₅.

Une telle amine tertiaire, qui sert d"accélérateur de polymérisation, est ajoutée dans une quantité entre 0,1 et 2 % en poids dans la composition, de préférence entre 0,2 et 1,5 % en poids.

De telles amines tertiaires sont décrites dans WO2009115610.

La composition (résine) peut également comprendre un promoteur d'adhésion à base d'ester de phosphate. Ceci est d'ailleurs très favorable lorsque la composition contient une amine tertiaire à haut poids moléculaire de formule (III) décrite ci-dessus.

On préfère que le promoteur d'adhésion à base d'ester de phosphate soit méthacrylé. En particulier, on utilise un promoteur d'adhésion à base d'ester de phosphate qui est l'ester phosphate 2-hydroxyéthyl de méthacrylate. Il peut notamment être obtenu sous le nom de Genorad 40 (Rahn AG, Zürich, Suisse). De tels promoteurs d'adhésion sont bien connus dans l'art, et sont notamment décrits dans US 4,223,115. On peut ainsi citer le 2-méthacryloyloxyethyl phosphate, le bis-(2-méthacryloyloxyethyl phosphate), le 2-acryloyloxyethyl phosphate, le bis-(2-acryloyloxyethyl phosphate), le méthyl-(2-méthacryloyloxyethyl phosphate), l'éthyl-(2-méthacryloyloxyethyl phosphate), un mélange d'esters mono and di-phosphate de 2-hydroxyéthyl de méthacrylate (notamment celui connu sous le nom de T-Mulz 1228 (Harcros Organics, Kansas City, US)) et les composés apparentés ou dérivés. On ajoute entre 1 et 6 % en poids de ce promoteur d'adhésion, de préférence entre 2 et 4 %.

La composition peut aussi comprendre un autre composé choisi parmi la saccharine et un monomère acrylate métallique. Ceci est d'ailleurs très favorable lorsque la composition contient une amine tertiaire à haut poids moléculaire de formule (III) décrite ci-dessus et le promoteur d'adhésion à base d'ester de phosphate.

La saccharine est un édulcorant autorisé au niveau européen sous le numéro E-954, aussi appelé 1,1-Dioxo-1,2-benzothiazol-3-one, et peut être utilisée en tant que telle, ou via un de ses dérivés (voir WO 87/000536).

La composition peut également contenir un monomère acrylate ou méthacrylate métallique (sel métallique (ou assimilé) d'acide acrylique ou méthacrylique), et notamment à base de zinc. La présence de ce composé dans la composition permet notamment d'améliorer les performances mécaniques de l'adhésif, ainsi que de jouer sur les temps de gel et/ou d'exothermie. En tant que composé (e), on peut notamment utiliser des monomères diacrylate de zinc, diméthacrylate de zinc, monométhacrylate de zinc, diacrylate de fer, diméthacrylate de fer, monométhacrylate de fer, diacrylate de calcium, diméthacrylate de calcium, monométhacrylate de calcium, diacrylate de magnésium, diméthacrylate de magnésium, monométhacrylate de magnésium. La quantité de ce sel dans la composition est comprise entre 0,5 et 3 % en poids.

Ces composés (amine tertiaire à haut poids moléculaire, promoteur d'adhésion, saccharine ou monomère acrylate ou méthacrylate métallique) peuvent être utilisés les uns avec les autres ou de façon indépendantes (c'est-à-dire qu'il n'est pas nécessaire qu'ils soient tous présents dans la résine). En particulier, les promoteurs d'adhésion, la saccharine et/ou le monomère acrylate ou méthacrylate métallique peuvent être présents dans une résine qui ne comprendrait pas l'amine tertiaire à haut poids moléculaire.

Les amines à haut poids moléculaire, telles que décrites ci-dessus, ont une fonction d'accélérateurs de polymérisation dans les compositions décrites ici, ce qui permet d'accélérer la montée en gel des adhésifs utilisant de telles compositions, et de modifier le pic d'exothermie. Ainsi que décrit dans WO2009115610, la présence des autres composés permet également d'obtenir des effets techniques intéressants.

Il peut toutefois être intéressant de contrôler la montée en gel, et de la retarder. Cela peut être réalisé par l'ajout, à une composition selon l'invention, d'une amine choisie dans le groupe des anilines, toluidines et phénols, substitués ou non. On préfère notamment les para-toluidines de formule :

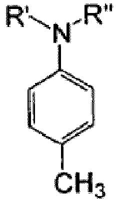

Les groupes R' et R" utilisables sont en particulier, séparément et indépendamment des groupes alkyles en C₁ à C₆, des groupes OH, des groupes CₙH₂ₙ₊₁OH, des groupes OCₙH₂ₙ₊₁ avec n inférieur ou égal à 4, des groupes OOCCH3 ou similaires, des groupes OR dans lequel R est un alkyle en C₁ à Ce. Des amines (d) particulièrement adaptées sont notamment les N-(2-Hydroxyléthyl)-N-Méthyl-para-toluidine, N,N-bis-(2-hydroxyethyl)-p-toluidine, N-méthyl-N-hydroxyethyl-p-toluidine ou la N,N-bis-(2-hydroxyéthyl)-3-méthylaniline, ou le 2,4,6-tri(diméthylaminométhyl) phénol. La quantité de ces amines dans la composition est comprise entre 0,5 et 3 % en poids.

Cette amine choisie dans le groupe des anilines, toluidines et phénols, substitués ou non peut aussi être présente dans la composition en l'absence de l'amine tertiaire à haut poids moléculaire

La composition peut également contenir d'autres éléments, notamment ceux décrits ci-après.

On peut ainsi utiliser un accélérateur de polymérisation, qui sert à favoriser la polymérisation et le durcissement de l'adhésif lorsque l'on rajoute le catalyseur. On connaît dans l'art l'utilisation d'amines tertiaires, préférentiellement aromatiques, telle que la diméthyl para-toluidine (DMPT), et/ou le 2,2'-(p-tolylimino)diéthanol ou la diméthylaniline (DMA). Ces éléments sont ajoutés à moins de 1%.

La composition peut également contenir d'autres monomères tels que l'acrylonitrile, le méthacrylonitrile, ou le styrène. On peut aussi utiliser des monomères multifonctionnels, préférentiellement des monomères trifonctionnels de type SR350 (triméthylolpropane triméthacrylate) ou SR368 (tris (2-hydroxy ethyl) isocyanurate triacrylate).

La composition peut également contenir un monomère acide tel qu'un monomère acide polymérisable par radicaux libres connu dans l'art du type acide carboxylique unsaturé, acide maléique, acide crotonique, acide isophtalique, acide fumarique. On utilise favorablement l'acide méthacrylique ou l'acide acrylique. On ajoute entre 2 et 10 % de ce composé, de préférence entre 3 et 7 %.

La composition peut également contenir de l'isobornyl acrylate (IBXA), du 2-hydroxy-éthyl-méthacrylate (HEMA), du 2-hydroxypropylméthacrylate (HPMA), du 2-(perfluorooctyl)éthyl acrylate (POA), du tétrahydrofurfuryl acrylate (THFA), de l'isobutoxyméthylacrylamide (IBMA). On peut ajouter des mélanges de ces composés, notamment un mélange de HEMA et HPMA. On ajoute entre 2 et 10 % de ce composé, de préférence entre 3 et 7 %.

La composition peut également contenir, dans ses modes de réalisation préférés, au moins un composé supplémentaire tel qu'un agent de rhéologie. L'agent de rhéologie sert à garantir une bonne viscosité de la composition selon l'invention, afin qu'elle puisse être aisément appliquée sur les surfaces à coller. On peut utiliser des polyamides telles que le Disparlon 6500 (Kusumoto Chemicals Ltd, Japon) ou des éléments pulvérulents à base de silice ou équivalents (silice pyrogénée ou silice fumée non traitée).

La composition peut également contenir des ions métalliques et/ou de I' 1-acétyl-2-phénylhydrazine (entre 0,1 % et 5% en poids).

D'autres éléments tels que des charges minérales (TiO₂, CaCOs, Al₂O₃, phosphate de zinc), des agents résistants aux ultraviolets (tels que la 2-hydroxyphenyltriazine, Tinuvin 400 de Ciba-Geigy), de la paraffine, peuvent également être ajoutés à la composition selon l'invention. Des inhibiteurs de polymérisation à radicaux libres tels que le BHT, ou des benzoquinones comme la naphtoquinone, l'hydroquinone ou l'éthylhydroquinone peuvent aussi être ajoutés pour augmenter la durée de vie de la composition.

Des exemples de compositions préférées sont (pourcentages en poids)
- Total ester de (meth)acrylate ; 45-50 %, dont
   ∘ GLYFOMA 24-36 %
   ∘ Autres monomères (seuls ou mélange) : 19-25%
- Copolymère blocs (préférentiellement SBS, SIS, SIBS seuls ou mélange) : 9-14 %, dont
   ∘ SBS : 11-14%
   ∘ SIS, SIBS ou mélange : 9-12,5 %
- Elastomère (préférentiellement polybutadiène fonctionnalisé par terminaisons vinyles) : 6-7,6 %
- Core-shells : 20-27 %
- Autres éléments (acide méthacrylique, promoteur d'adhésion, amine, charges) : 7,5-9,5 %

En particulier,
- Total ester de (meth)acrylate ; 45-50 %, dont
   ∘ GLYFOMA 35-42 %
   ∘ Autres monomères (seuls ou mélange) : 9-14%
- SBS : 11-14%
- Elastomère (préférentiellement polybutadiène fonctionnalisé par terminaisons vinyles) : 7-7,5 %
- Core-shells : 20-26 %
- Autres éléments (acide méthacrylique, promoteur d'adhésion, amine, charges) : 7,5-8 %
- Total ester de (meth)acrylate ; 45-50 %, dont
   ∘ GLYFOMA 24-36 %
   ∘ Autres monomères (seuls ou mélange) : 13-22 %
- SIS, SIBS ou mélange : 9-13 %
- Elastomère (préférentiellement polybutadiène fonctionnalisé par terminaisons vinyles) : 6-7,6 %
- Core-shells : 24-27 %
- Autres éléments (acide méthacrylique, promoteur d'adhésion, amine, charges) : 7,5-9,5 %
- Total ester de (meth)acrylate ; 45-50 %, dont
   ∘ GLYFOMA 24-36 %
   ∘ Autres monomères (seuls ou mélange) : 12-20 %, dont
      ▪ MAISOBOR 5-8%
      ▪ A2EH : 6-7%
      ▪ HEMA : 0-5%
- SIS, SIBS ou mélange : 9-14 %
- Elastomère (préférentiellement polybutadiène fonctionnalisé par terminaisons vinyles) : 13-18 %
- Core-shells : 17,5-20 %
- Autres éléments (acide méthacrylique, promoteur d'adhésion, amine, charges) : qsp 100 %

L'invention se rapporte également à un adhésif structural bi-composant comprenant :
a. Une composition telle que décrite ci-dessus, et qui est la résine polymérisable, et
b. Un agent catalyseur de polymérisation, destiné à être ajouté à ladite composition afin d'initier la polymérisation des monomères méth(acrylate), cet agent catalyseur comprenant un agent initiateur de polymérisation à radicaux libres et optionnellement un silane époxydé.

Les silanes époxydés sont bien connus dans l'art. La demande WO 02/051899 cite ainsi une liste de silanes époxydés utilisables dans l'agent catalyseur. Dans le cadre de la composition selon l'invention, on peut ainsi utiliser un silane époxydé choisi parmi le β-(3,4-epoxycyclohexyl)-éthyltriméthoxysilane, le β-(3,4-epoxycyclohexyl)éthyl-triéthoxysilane, le γ-Glycidoxypropyltriméthoxysilane, le γ-Glycidoxy-propylméthyl-diméthoxysilane, le γ-Glycidoxypropyl-méthyldiéthoxysilane, le γ-Glycidoxypropyl-méthyltriéthoxysilane, le 3-Glycidyloxypropyl-triéthoxysilane (GLYEO), et le 3-Glycidyloxypropyl-triméthoxysilane (GLYMO).

Le β-(3,4-epoxycyclohexyl)ethyl-triethoxysilane, vendu notamment sous le nom de Coatosil 1770 (Momentive Performance Materials, Wilton, CT, États-Unis) est particulièrement adapté à une mise en oeuvre avec une composition telle que décrite ci-dessus. On peut également utiliser des oligomères époxy silane fonctionnels tels que le CoatOsil MP 200 cross linker (Momentive Performance Materials). Le silane époxydé est généralement compris entre 1 à 30 %, de préférence entre 5 et 20 % (en poids) de l'agent catalyseur.

En utilisant un silane époxydé, on peut ainsi obtenir des compositions comprenant moins de 20 % d'agent plastifiant dans l'agent catalyseur. Dans certains modes de réalisations, les compositions selon l'invention contiennent moins de 15 %, voire moins de 12 % ou moins de 10 % (en poids) d'un agent plastifiant. Le terme « moins de xxx % » est entendu comme comprenant la borne supérieure, et signifiant contenant « au plus xxx % ». Dans un mode de réalisation particulier, on n'ajoute pas de plastifiant à l'agent catalyseur.

L'agent initiateur de polymérisation à radicaux libres est bien connu de l'homme du métier. Ainsi, il s'agit d'un agent oxydant, qui réagit avec les composés réducteurs (amines) présents dans la résine. Cet agent peut ainsi être un peroxyde, tel que le peroxyde de benzoyle (agent préféré) et tout autre peroxyde de diacyle, un hydroperoxyde tel que l'hydroperoxyde de cumène, un perester tel que le P-butylperoxybenzoate ou le tertbutylperoxybenzoate, un hydroperoxyde cétonique tel que l'hydroperoxyde de méthyle-éthyle-cétone. Il peut aussi être un sel organique de métal de transition, tel que le naphthénate de cobalt, ou un composé contenant une chlorine labile, tel que chloride de sulfonyle.

De façon habituelle, l'agent catalyseur contient entre 0,5 et 50 % (en poids) de cet agent initiateur de polymérisation, de façon plus préférée entre 5 et 40 % de façon la plus préférée entre 10 % et 20 % en poids. Dans un mode de réalisation préféré, l'agent catalyseur contient environ 20 % en poids de l'agent initiateur de polymérisation. L'agent préféré est le peroxyde de benzoyle. Si l'on souhaite ralentir la vitesse de polymérisation pour augmenter la durée d'application de l'adhésif, on peut utiliser de l'ordre de 10 % en poids d'agent initiateur de polymérisation. L'agent catalyseur peut contenir également des charges, notamment des charges minérales, telles que silice, carbonate de calcium ou titane. Il peut également contenir des agents stabilisants, des agents épaississants, des agents débullants ou des agents colorants.

Dans un mode de réalisation particulier, l'agent catalyseur contient en outre une résine époxyde (ou résine époxyde). De tels agents sont décrits dans l'art, et notamment dans WO 2003/097756. Cette résine époxyde est présente dans une quantité comprise entre 10 et 60 % (en poids) dans l'agent catalyseur, de préférence entre 15 et 45 %, de façon plus préférée entre 20 et 30 %.

Le terme "résine époxyde" couvre un nombre important de composés, et notamment l'oxyde octadécylène, le glycidylméthacrylate, l'éther diglycidyl de bisphénol A, le dioxyde de vinylcyclohéxène le 4-époxycyclohexylméthyl-3, le 4-époxycyclohexane carboxylate, les époxy-cresol-novolacs, époxy-phénol-novolacs, les résines époxydes à base de bisphénol A. D'autres composés utilisables dans la composition selon l'invention sont cités dans WO 2003/097756.

On préfère utiliser des résines époxydes liquide basées sur le bisphénol A, qui sont relativement peu chères, notamment le diglycidyl éther de bisphénol A.

L'invention se rapporte également à un dispositif, et notamment une cartouche pour l'application d'un adhésif structurel bi-composant tel que décrit ci-dessus, comprenant
i. un compartiment contenant la résine (méth)acrylique contenant des monomères acrylates ou méthacrylates selon la formule (I), la formule (II) ou un mélange de molécules de formules (I) et (II)
ii. un autre compartiment contenant l'agent catalyseur de polymérisation.

Les deux composés sont mis en contact l'un avec l'autre et leur mélange est appliqué sur la surface d'un des deux matériaux à assembler, puis l'autre matériau est appliqué sur le premier.

Afin d'améliorer le mélange des deux composantes (résine et agent catalyseur), on peut utiliser un système de buse dynamique, dans lequel l'intérieur de la buse contient une vis sans fin permettant de bien mixer les deux composants pour optimiser la polymérisation et l'homogénéité de la résine.

On peut aussi utiliser des systèmes de buses mélangeurs statiques dans lesquels la géométrie améliore le mélange (par exemple une géométrie carrée constituée d'une série d'éléments gauches et droits disposés en alternance avec des inverseurs de débit intermittents).

L'invention se rapporte également à l'utilisation combinée d'une résine telle que décrite plus haut et d'un agent catalyseur comprenant un amorceur de polymérisation radicalaire de type peroxyde dans un procédé d'adhésion d'un matériau sur un second matériau, en particulier lorsqu'au moins un matériau est métallique.

L'invention se rapporte également à une méthode de collage d'un premier matériau sur un second matériau, comprenant les étapes consistant à
i. Appliquer une composition (résine) telle que décrite plus haut, mélangée avec un agent catalyseur de polymérisation sur le premier matériau, et
ii. Appliquer le second matériau sur le premier matériau,
les deux matériaux étant collés l'un à l'autre après polymérisation de la résine.

Il convient toutefois de noter que les résines telles que décrites sont également adaptées au collage d'autres matériaux, tels que les composites, le verre, notamment pour des collages de matériaux différents.

L'utilisation d'une composition selon l'invention et d'un agent catalyseur permet donc d'effectuer des collages de métaux, plastiques, matériaux composites sur du composite et trouve ainsi son application notamment dans le domaine de la construction de silos, de bateaux, de voitures, ou de remorques de camions. On peut également l'utiliser dans le domaine de la construction automobile, ou le domaine ferroviaire.

Ainsi, la composition permet l'adhésion d'un matériau sur un autre matériau, l'un ou l'autre matériau étant notamment un métal, un plastique, du bois ou un matériau composite. On peut donc utiliser la composition dans l'une ou l'autre des applications suivantes : adhésion métal / métal, métal / composite, métal / plastique, métal / bois, bois / plastique, bois / composite, bois / bois, plastique / composite, plastique / plastique, verre / polycarbonate, verre / polyamide, ou composite / composite.

La composition selon l'invention est aussi particulièrement intéressante lorsqu'il convient de coller un matériau sur un matériau composite ou métallique.

Les adhésifs structuraux méthacrylates souples à hautes performances mécaniques obtenus avec la composition selon l'invention sont résilients, résistent aux chocs et aux vibrations. Ils permettent de réaliser des assemblages par collage entre matériaux d'une même nature chimique ou différents par exemple : bétons, bois, céramiques, verres, ferrites, aluminium, aluminium anodisé, acier, acier galvanisé, acier inoxydable, métaux peints, acier, cuivre, zinc, abs, pvc, polyester, acryliques, polystyrène, Gel Coat polyester ou époxydes, matériaux composites, composites renforcés de fibres de verre, stratifiés, nids d'abeilles, et de tout matériau peint ou laqué. Les adhésifs structuraux obtenus avec la composition selon l'invention sont particulièrement intéressants pour le collage de l'acier galvanisé ou de l'acier électro-zingué.

Ils peuvent également combler des jeux importants entre les substrats, d'épaisseurs, de rugosités, de planéités différentes et variables avec une meilleure répartition des contraintes.

La souplesse de cette composition permet ainsi de reprendre les efforts des dilatations différentielles entre les substrats sur des longueurs importantes de plusieurs mètres, en diminuant et en annulant les défauts de géométrie (angle, rugosité, planéité).

Les applications et secteurs d'activités concernés comprennent notamment :
Collage de renforts, rails, charpentes, poutres, raidisseurs, panneaux, cloisons, fixations, supports, éléments de carrosserie, équerres de renfort, inserts, éléments cylindriques et coniques, charnières, cadres, etc. Collage avec reprise de stratification sur cloison, collage avec remplissage nécessitant une tenue mécanique élevée.

Notamment collage de tout élément de structure ou mécanique collés dans la construction navale, automobile, ferroviaire (et infrastructures), aéronautique, aérospatiale, d'équipements électroniques, électromécaniques, d'électroménager, de structures militaires, d'enseignes, de panneaux de signalisation (et publicitaires), de mobiliers urbains, de menuiseries extérieures (fenêtres, baies vitrées, portes-fenêtres, portes d'entrée et de garages), d'éoliennes, containers, d'ouvrages d'art et d'infrastructure (notamment les ponts suspendus, plates-formes pétrolières offshore, aérogares), construction et fixation et de façade d'immeuble et de panneaux solaires.

### Exemples

Les exemples ci-dessous illustrent l'invention sans en restreindre la portée. Les compositions décrites sont également objet de l'invention.

### Exemple 1 : matières premières utilisées et méthodologie

On utilise les éléments suivants :

### Composition (résine)

monomère ester (méth)acrylate : voir ci-dessous
élastomère liquide fonctionnalisé : HYPRO^{™} VTB 2000x168 (EPM, USA) monomère acide : acide méthacrylique (AMA)
promoteur d'adhésion : méthacrylate phosphate Genorad 40 (Rahn AG) accélérateur de polymérisation : N-(2-Hydroxyléthyl)-N-Méthyl-para-toluidine (MHPT, CAS 2842-44-6)
toluidine (d) : N,N-bis-(2-hydroxyéthyle)-p-toluidine (PTE)
Dimétacrylate de Zinc : SR 708 (Sartomer)
Charges : ions métalliques, agents de rhéologie, agents pulvérulents copolymère SBS : Kraton D1102 (Kraton Polymers)
copolymère SIS : Kraton D1114 (Kraton Polymers)
copolymère SIBS : Kraton D1171 (Kraton Polymers)
agent de rhéologie : Disparlon 6500 (Kusumoto Chemicals)
particules polymériques élastomériques (core shells, MBS) : Cleartrength C303H, XT100 (Arkema), FM50 Sundow Polymers

### Agent catalyseur

Peroxyde de benzoyle à 20 %, avec ou sans silane epoxydé (cf WO2011033002).

### Ratio de mélange composition : catalyseur = 10 :1

La résistance au cisaillement par traction (RC) est mesurée selon la norme ISO 4587. Brièvement, on utilise des éprouvettes en aluminium 2024T3 de dimensions 100 x 25 x 1,6 mm (L x I x e). Deux éprouvettes sont collées l'une sur l'autre, la zone de recouvrement étant de 25 x 12 mm (300 mm²), avec une épaisseur du joint de colle d'environ 200 à 400 µm. On mesure ensuite la force nécessaire pour rompre l'adhésion en tirant sur les deux éprouvettes.

On utilise la norme ISO 527 pour effectuer les tests permettant de mesurer l'allongement à la rupture AR. L'allongement est observé selon une méthode bien connue de l'homme du métier décrite notamment par la norme ISO 527, la vitesse d'étirement de l'adhésif étant constante et de 50 mm / mn.

La résistance au pelage en T (RP) est évaluée selon la norme ISO 14173. On utilise des éprouvettes en aluminium 2024T3 de dimensions 200 x 25 x 1,6 mm que l'on colle avec un recouvrement de 150 x 25 mm et un joint de colle épais d'environ 500 µm.

### Examples

### Example 1. Test de dissolution de copolymères blocs dans différents monomères

On a évalué la capacité de mélange de différents monomères avec des copolymères blocs SBS et SIS.

La référence était le monomère MAM (méthacrylate de méthyle) qui présente un ratio (Monomère / (mélange SIS-SIBS ou mélange SBS)) de 65/35.

On a observé que les THFMA (méthacrylate de tétrahydrofurfuryle), MAISOBOR, BZMA (Benzyl-méthacrylate), MA2EH, cHMA (cylohéxyl méthacrylate), A2EH, LAUMA (lauryl méthacrylate) présentent plus ou moins les mêmes ratios de mélange que la référence (62,5/37,5 à environ 75/25). En revanche, il était compliqué d'obtenir des taux de copolymères blocs compatibles avec les données de l'art antérieur lorsqu'on les mélange avec de l'IGPMA (mélange presque impossible) ou le GLYFOMA (pas plus de 20% de copolymères blocs), du fait d'une viscosité du mélange non utilisable d'un point de vue pratique.

### Exemple 2. Reproduction des compositions de l'art antérieur avec les monomères sélectionnés

En utilisant les monomères identifiés à l'exemple 1, pour lesquels le mélange avec les copolymères blocs est possible, on a testé des compositions similaires aux compositions de l'art antérieur (décrites notamment dans WO2008125521A1).

Les exemples de cette demandent décrivent des compositions qui comprennent
- Du monomère (meth)acrylate 50-60 %
- Des copolymères blocs (SBS, SIS, SIBS ou mélanges) : entre 15 et 22 %
- De l'élastomère (polybutadiène fonctionnalisé) : entre 7-10%
- Des core-shells : 10-15 %
- D'autres composés : qsp 100 %

Des compositions présentant les mêmes proportions de composants ont été réalisées, en utilisant les monomères méthacrylates suivants : THFMA, MAISOBOR, BZMA, MA2EH, cHMA, LAUMA.

Les résistances au cisaillement étaient comprises entre 3,2 et 17,4 MPa.

Les résistances au pelage étaient comprises entre 1,6 et 9,6 N/mm.

La composition présentant une résistance au pelage de 9,6 N/mm présentait une résistance au cisaillement de 7,3 MPa.

La composition présentant une résistance au cisaillement de 17,4 MPa présentait une résistance au pelage de 3,3 N/mm.

On a aussi préparé des compositions dans lesquelles on a effectué des mélanges de monomères (MAISOBOR et MA2EH à diverses proportions, BZMA et MA2EH, ou MAISOBOR, BZMA et MA2). Les quantités de copolymères blocs, core-shells ou élastomère étaient similaires à l'art antérieur (voir ci-dessus).

Les résistances au cisaillement étaient comprises entre 11,2 et 16,3 MPa.

Les résistances au pelage étaient comprises entre 2,1 et 7,7 N/mm.

La composition présentant une résistance au pelage de 7,7 N/mm présentait une résistance au cisaillement de 12,6 MPa.

La composition présentant une résistance au cisaillement de 16,3 MPa présentait une résistance au pelage de 2,1 N/mm.

Ainsi, on a fait des compositions contenant du MAISOBOR (29%), du MA2EH (27,2%), 17,8% de SBS, 7,5% de VTB, 10% de coreshells, et on a obtenu une résistance au pelage inférieure de 3,2 N/mm.

En utilisant un mélange de BZMA (41,1 %) et MA2EH (14,4%), du SBS (18,1%), VTB (7,7%), core-shells (11,2%), on a obtenu une résistance au pelage de 5,9 N/mm.

Ainsi, le simple fait de substituer, au méthacrylate de méthyle, des monomères (ou des mélanges de monomères) ayant une odeur moins forte que le méthacrylate de méthyle, dans les compositions de l'art antérieur ne permet pas de conserver les propriétés mécaniques de ces compositions de l'art antérieur. D'une façon générale, on observe qu'il est très compliqué d'obtenir une bonne résistance au pelage, supérieure à 10 N/mm.

### Exemple 3. Compositions présentant une faible odeur et de bonnes propriétés mécaniques

Afin d'obtenir des compositions présentant une faible odeur et des performances mécaniques similaires à celles des compositions de l'art antérieur (WO2008125521A1 ou WO2008080913), les inventeurs ont augmenté la quantité de « core-shell » et diminué les quantités de copolymères blocs.

De façon surprenante, ces changements de proportions, et l'utilisation des monomères qui n'avaient pas été sélectionnés après les résultats obtenus à l'exemple 1, permettent d'obtenir des résultats similaires à ceux de l'art antérieur et bien meilleurs que ceux obtenus uniquement selon l'exemple 2.

| | **1** | **2** | **3** | **4** | **5** |
|---|---|---|---|---|---|
| GLYFOMA | 51,4 | 42,2 | 36,2 | 25,9 | 35,8 |
| IPGMA | | | | | |
| MAISOBOR | | | | 6,3 | |
| MA2EH | | | | 12,6 | |
| A2EH | | 9,6 | 8,3 | | 8,3 |
| HEMA | | | 5 | 4,5 | 5 |
| SBS D1102 | 9,8 | 13,6 | 11,8 | | |
| SIS D1114 | | | | 7 | 9,2 |
| SIBS D1171 | | | | 2,2 | 2,9 |
| VTB2000x168 | 6,8 | 7 | 6,1 | 9,9 | 6,1 |
| AMA | 4,5 | 4,6 | 4 | 5,3 | 4 |
| GENORAD 40 | 2,1 | 2,1 | 3 | 3,1 | 3 |
| MHPT | 0,5 | 0,4 | 0,3 | 0,3 | 0,4 |
| PTE | 0,3 | 0,3 | 0,3 | 0,2 | 0,3 |
| XT100 (MBS) | 24,6 | 20,2 | 25 | 22,7 | 25 |
| Total | 100 | 100 | 100 | 100 | 100 |
| | | | | | |
| Rc (Mpa) | 22 | 18,3 | ND | 20,5 | ND |
| Rp (N/mm) | 12 | 14 | 10,8 | 10,4 | 17 |
| AR (%) | 12 | 117 | ND | 40 | 192 |

**Tableau 1. Résultats obtenus avec diverses compositions. ND : non déterminé**

| | **6** | **7** | **8** | **9** | **10** |
|---|---|---|---|---|---|
| GLYFOMA | 29,4 | 24,1 | 26,1 | 24,5 | |
| IPGMA | | | | | 27,6 |
| MAISOBOR | 8 | 10 | 10,1 | 15 | 8 |
| MA2EH | | | | | |
| A2EH | 6,7 | 10 | 7,4 | 5 | 10 |
| HEMA | 5 | 5 | 4,7 | 5 | 4 |
| SBS D1102 | | | | | |
| SIS D1114 | 7,2 | 8,2 | 7,1 | 7,9 | 7,4 |
| SIBS D1171 | 2,2 | 2,6 | 2,2 | 2,5 | 2,3 |
| VTB2000x168 | 7,6 | 7,5 | 7,1 | 7,5 | 7,5 |
| AMA | 4 | 4 | 3,8 | 4 | 4 |
| GENORAD 40 | 3 | 3 | 5 | 3 | 3,5 |
| MHPT | 0,3 | 0,4 | 0,3 | 0,4 | 0,4 |
| PTE | 0,2 | 0,2 | 0,2 | 0,2 | 0,3 |
| XT100 (MBS) | 26,4 | 25 | 26 | 25 | 25 |
| Total | 100 | 100 | 100 | 100 | 100 |

| Résultats mécaniques | | | | | |
|---|---|---|---|---|---|
| Rc (Mpa) | ND | ND | ND | 19 | 14 ,4 |
| Rp (N/mm) | 15,7 | 14 | 17 | 14,7 | 10,6 |
| AR (%) | 146 | 153 | 80 | 56 | 220 |

Les résultats présentés ci-dessus montrent bien que l'augmentation du taux de particules formées d'une coquille thermoplastique et d'un coeur élastomérique (core-shells) au-delà de 20 %, et la diminution de la quantité de copolymères blocs (SBS, SIS, SIBS), en utilisant au moins 20 % de composés de formule générale (I) ou (II), seuls ou avec d'autres monomères méthacrylates, permet d'obtenir des compositions présentant une résistance au pelage supérieure à 10 N/mm, et une bonne résistance au cisaillement et/ou un bon allongement à la rupture.

Dans la plupart des cas, on obtient à la fois une bonne résistance au pelage, une bonne résistance au cisaillement et un bon allongement à la rupture, même si dans certains cas on peut n'observer qu'une bonne résistance au pelage et une bonne résistance au cisaillement sans allongement important à la rupture, ou une bonne résistance au pelage, un bon allongement à la rupture, et une résistance au cisaillement un peu moins importante.

Par ailleurs, les adhésifs obtenus présentent une faible odeur par rapport aux adhésifs de l'art antérieur obtenus avec du méthacrylate de méthyle en tant que monomère. En particulier, l'utilisation de GLYFOMA ou IGPMA permet de réduire considérablement (pratiquement supprimer) les odeurs, rendant ainsi ces adhésifs aisément utilisables sur des lignes de production (automobile, électronique...).

On a aussi préparé d'autres compositions.

**Tableau 2. Résultats obtenus avec diverses compositions**

| | **11** | **12** | **13** | **14** | **15** |
|---|---|---|---|---|---|
| GLYFOMA | 29.7 | 28.1 | 28.1 | 31.8 | 30.5 |
| MAISOBOR | 7.3 | 5.2 | 1.0 | - | 7.6 |
| A2EH | 6.8 | 6.5 | 6.5 | 6.5 | 7.0 |
| HEMA | 4.7 | 4.0 | 3.1 | 5.1 | 4.9 |
| SBS D1102 | | | | 13.9 | |
| SIS D1114 | 7.5 | 7.2 | 7.2 | - | 7.8 |
| SIBS D1171 | 2.3 | 2.2 | 2.2 | - | 2.4 |
| VTB2000x168 | 13.1 | 18.0 | 25.0 | 18 | 13.6 |
| AMA | 5.2 | 5.8 | 5.0 | 2.9 | 5.4 |
| GENORAD 40 | 3.0 | 3.0 | 3.0 | 3 | 3.5 |
| MHPT | 0.5 | 0.5 | 0.5 | 0.5 | 0.5 |
| PTE | 0.5 | 0.5 | 0.5 | 0.5 | 0.5 |
| XT100 (MBS) | 19.4 | 19.0 | 17.9 | 17.8 | - |
| C303H (MBS) | - | - | - | - | 16.3 |
| Total | 100 | 100 | 100 | 100 | 100 |
| Rc (Mpa) | 20.1 | 17.5 | 17.0 | 20.4 | 19.1 |
| Rp (N/mm) | 14.5 | 16.3 | 16.7 | 11.5 | 10.2 |
| AR (%) | 100.4 | 155.2 | 136.9 | 117.8 | 110.3 |

Les exemples ci-dessus montrent que l'on peut maintenir les performances observées en faisant varier les quantités de monomères et des autres composés. Les Tg sont également acceptables (supérieures à 80°C). Ainsi, en suivant l'enseignement de la demande (nature et proportions de composants à utiliser), l'homme du métier est capable d'adapter les différentes proportions en maintenant des performances telles que décrites ci-dessus.

## Revendications

1. Composition utilisable dans un adhésif structural, ladite composition comprenant (en poids) :
(a) Entre 40 % et 60 % d'au moins un monomère (méth)acrylate, dont au moins 20 % d'une molécule de formule générale (I), d'une molécule de formule générale (II) ou d'un mélange de molécules de formule générale (I) et (II) 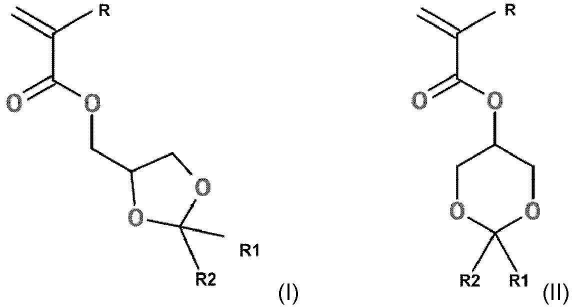 dans laquelle R, R1 et R2 sont respectivement et indépendamment H ou CH₃,
(b) au moins 20 % de particules formées d'une coquille thermoplastique et d'un coeur élastomérique (core shell)
(c) entre 8 et 13 % d'un copolymère bloc élastomérique contenant du styrène et au moins un second monomère
(d) entre 5 et 10 % d'un élastomère, choisi parmi le polybutadiène non fonctionnalisé, le polybutadiène fonctionnalisé par des terminaisons carboxyl, le polybutadiène fonctionnalisé par des terminaisons vinyl, le polybutadiène méthacrylé, le polyisoprène, le polychloroprène, les copolymères butadiène-acrylonitrile et les mélanges de ces éléments.

2. Composition selon la revendication 1, **caractérisée en ce que** ledit monomère de formule (I) ou et (II) est un mélange de méthacrylate de 1,3-dioxan-5-yl, de méthacrylate de 1,3-dioxolan-4-ylmethyl.

3. Composition selon la revendication 1 ou 2, **caractérisée en ce qu'**elle contient entre 25 et 35 % du monomère de formule générale (I) ou (II) et au moins 10 % d'un autre monomère.

4. Composition selon la revendication 3, **caractérisée en ce que** l'autre monomère est choisi dans le groups constitué du méthacrylate d'isobornyle, du méthacrylate de 2-éthylhexyle, de l'acrylate de 2-éthylhexyle, du méthacrylate de 2-hydroxy-éthyl, du méthacrylate de 2-hydroxypropyl, du méthacrylate de lauryle, des esters à base de polyéthylène-glycol et des mélanges de ces esters.

5. Composition selon l'une des revendications 1 à 4, **caractérisée en ce qu'**elle contient au moins 5 % d'acrylate de 2-éthylhexyle.

6. Composition selon l'une des revendications 1 à 5, **caractérisée en ce que** les particules (b), le copolymère bloc élastomérique (c) et l'élastomère (d) contiennent du butadiène.

7. Composition selon l'une des revendications 1 à 6, **caractérisée en ce qu'**elle contient entre 9 et 12 % du copolymère bloc élastomérique (c).

8. Composition selon l'une des revendications 1 à 7, **caractérisée en ce que** les particules (b) sont choisies parmi les particules acrylonitrile-butadiène-styrène, méthacrylate-butadiène-styrène, méthacrylate-acrylonitrile-butadiène-styrène, méthacrylate-acrylonitrile et les mélanges de celles-ci.

9. Composition selon l'une des revendications 1 à 8, **caractérisée en ce que** la quantité de particules formées d'une coquille thermoplastique et d'un coeur élastomérique (core shell) (b) est inférieure ou égale à 26 %.

10. Composition selon l'une des revendications 1 à 9, **caractérisée en ce que** le second monomère du copolymère bloc élastomérique (c) est choisi parmi l'isoprène et le butadiène, en particulier choisi parmi le SIS, le SBS, le SIBS, le SEBS et leurs mélanges.

11. Composition selon l'une des revendications 1 à 10, **caractérisé en ce que** ledit élastomère (d) est choisi parmi le polybutadiène non fonctionnalisé, le polybutadiène fonctionnalisé par des terminaisons carboxyl, le polybutadiène fonctionnalisé par des terminaisons vinyl), le polyisoprène, le polychloroprène et les mélanges de ces éléments.

12. Composition selon l'une des revendications 1 à 11, **caractérisée en ce qu'**elle comprend également une amine choisie parmi le groupe constitué des toluidines, anilines et phénols substitués ou non.

13. Composition selon l'une des revendications 1 à 12, **caractérisée en ce qu'**elle contient également du crystal violet lactone ou de la 4,4',4" méthylidynetris (N, N- diméthylaniline).

14. Composition selon l'une des revendications 1 à 13, **caractérisée en ce qu'**elle comprend également un promoteur d'adhésion à base d'ester de phosphate, préférentiellement méthacrylé, de préférence l'ester phosphate 2-hydroxyéthyl de méthacrylate ou un mélange d'esters mono and di-phosphate de 2-hydroxyéthyl de méthacrylate.

15. Composition selon l'une des revendications 1 à 14, **caractérisée en ce qu'**elle comprend en outre un monomère acrylate métallique et/ou au moins un composé supplémentaire choisi parmi un agent de rhéologie, un monomère acide, du triméthylolpropane triméthacrylate, et du tris (2-hydroxy ethyl) isocyanurate triacrylate.
